# EUROPEAN PATENT APPLICATION

(11) **EP 4 318 511 A1**
(43) Date of publication of application: **07.02.2024**
(21) Application number: 22779445.0
(22) Date of filing: 24.01.2022
(51) Int. Cl.: H01F 38/14, H01F 41/12, H02J 50/10, H02J 7/00, B60L 53/12, B60L 53/30, H01F 27/32, B60M 7/00

(54) **CONTACTLESS CHARGING COIL UNIT AND MANUFACTURING METHOD THEREOF**

(30) Priority: 30.03.2021 JP 2021056758
(71) Applicant: SELCO CO., LTD., Nagano 384-0808 (JP)
(72) Inventor: KOBAYASHI, Nobutomo, Komoro-shi, Nagano 384-0808 (JP); YAMAZAKI, Kesao, Komoro-shi, Nagano 384-0808 (JP); ASANUMA, Yuji, Komoro-shi, Nagano 384-0808 (JP)
(74) Representative: Mewburn Ellis LLP
(86) International application number: PCT/JP2022/002421
(87) International publication number: WO 2022/209215

(57) **Abstract**

A contactless charging coil unit includes a base member with an upper surface having a coil housing portion formed therein in a spiral shape in a direction from the central portion to the outer periphery side; a coil formed by winding a litz wire along the coil housing portion, the litz wire having been obtained by twisting together a plurality of round wires each having a circular cross-section and covered with an insulating film; a covering member adapted to cover an upper portion of the base member, the covering member having a lower surface with a projection corresponding to and fittable into the coil housing portion of the base member; and a sealing material for firmly fixing the coil between the base member and the covering member to form a watertight seal.

## Description

### BACKGROUND OF THE INVENTION

### Field of the Invention

The present invention relates to a contactless charging coil unit for use in an electromagnetic induction-type non-contact charging system for wirelessly charging an electric vehicle (EV), and a manufacturing method of such a contactless charging coil unit.

### Description of the Related Art

Conventionally, a method of charging an electric vehicle using a dedicated outlet for the electric vehicle via a charging cable has been commonly used. As the EV market is expected to further expand in the future, the automation of charging is an essential requirement. Thus, there is a high expectation for a system that can perform charging of a vehicle without contacting it, called contactless charging (i.e., non-contact charging), that only requires the vehicle to be parked at a designated position to charge the vehicle without connecting a charging cable thereto.

As a method of wirelessly charging an electric vehicle, there has been proposed an electromagnetic induction-type non-contact power supply system that uses coils. The non-contact power supply system includes a power-supply-side coil (i.e., a primary coil) to be supplied with power from an alternating-current power supply, and a power-receiving-side coil (i.e., a secondary coil) that is arranged facing the power-supply-side coil and is magnetically coupled to the power-supply-side coil. In such a non-contact power supply system for electric vehicles, the power-supply-side coil is arranged outside the vehicle (i.e., on the floor surface), and the power-receiving-side coil is arranged in the vehicle. A battery electrically coupled to the secondary coil in a receiving unit is adapted to be charged as the electromagnetic induction is generated between the primary coil and the secondary coil that is put close to the primary coil.

A coil unit for a non-contact power supply system includes a coil arranged between an upper case and a lower case as with an induction cooker based on induction heating (IH). In recent years, there has been proposed a coil unit for wireless power transmission that has sufficient insulation secured between a wire rod and a metal-based material, such as a shielding material, arranged around the coil unit, and has improved load-resistance performance (for example, see Patent Literature 1).

In a coil unit for wireless power transmission described in Patent Literature 1, the surface of a planar bobbin has a groove-like coil housing portion formed therein in a spiral shape in a direction from the center toward the outer periphery side, and a wire rod (i.e., a round wire) is wound along the coil housing portion, and further, an insulating covering member is arranged to cover the upper portion of the planar bobbin.

To achieve higher performance of a non-contact power supply system, it is desired to use a rectangular wire as each of a power-supply-side coil and a power-receiving-side coil. In addition, there is a tendency that the cross-sectional area of each coil is increased for the purpose of further increasing the space factor of the coil. However, the increase in the cross-sectional area results in an increase in the eddy current loss, which is problematic. As a measure against such an increase in the eddy current loss, a method of using a litz wire (i.e., wire strands) including a plurality of enameled wires as a conductor of a coil is drawing attention. Using a litz wire is advantageous in that it can reduce conductor loss (i.e., eddy loss) generated due to the influence of an eddy current more than when a single wire is used. However, when a common litz wire is used, the space factor of the coil is low, which is problematic.

In recent years, to obtain stable and excellent electrical characteristics while satisfying the dimensional requirements, there has been proposed a litz wire coil for a contactless power supply system that is obtained by spirally winding a litz wire to form an annular plane coil, and then pressure-shaping the litz wire in its thickness direction to allow it to have a rectangular cross-section (for example, see Patent Literature 2).

In the manufacturing method of the litz wire coil described in Patent Literature 2, an annular plane coil is formed by spirally winding a litz wire within a winding frame that includes an annular plane part, an internal diameter restriction part formed in a cylindrical shape at the center of the plane part, and an external diameter restriction part formed in an upright position at the outer peripheral edge of the plane part. Then, the litz wire wound on the plane part is pressure-shaped in its thickness direction with a predetermined pressure applied by a pressing member having an annular shape corresponding to the plane part of the winding frame. This allows the litz wire to have a rectangular cross-section and thus allows for an increase in the space factor.

### PATENT LITERATURE

Patent Literature 1: Japanese Patent Publication No. 2016-76605A
Patent Literature 2: Japanese Patent Publication No. 2014-120325A

By the way, a coil unit for a non-contact power supply system for electric vehicles is used in the outdoor environment. Thus, it is required to protect a coil made of a delicate litz wire, which includes thin films, against water, vibration, load, and the like.

However, although the coil unit described in Patent Literature 1 above can have sufficient insulation secured between the wire rod and the metal-based material, such as a shielding material, arranged around the coil unit, and can have improved load-resistance performance, the coil unit cannot have a waterproof property, vibration resistance, or thermal conductivity, which is problematic. Further, the space factor of the coil is low, which is also problematic.

Meanwhile, in the manufacturing method of the litz wire coil described in Patent Literature 2 above, after the annular plane coil, which is a litz wire with a rectangular cross-section, is formed, it is necessary to take the coil out of the winding frame and then fix the coil using a tape or the like, and it is also necessary to arrange the coil in a housing case to form a coil unit. Thus, since the coil winding operation is complex, it is difficult to secure high quality. Further, there is a problem in that the waterproof property, vibration resistance, insulating property, and thermal conductivity of the coil unit are not taken into consideration.

### SUMMARY OF THE INVENTION

Thus, an object of the present invention is to provide a contactless charging coil unit that is excellent in the waterproof property, vibration resistance, insulating property, and thermal conductivity, and a manufacturing method of such a contactless charging coil unit.

Another object of the present invention is to provide a contactless charging coil unit that has a low cost and high production efficiency and thus is suitable for mass production, and a manufacturing method of such a contactless charging coil unit.

A further another object of the present invention is to provide a contactless charging coil unit that can have an increased space factor of a coil, and a manufacturing method of such a contactless charging coil unit.

According to the present invention, a contactless charging coil unit includes a base member with an upper surface having a coil housing portion formed therein in a spiral shape in a direction from a central portion toward an outer periphery side; a coil formed by winding a litz wire along the coil housing portion, the litz wire having been obtained by twisting together a plurality of round wires each having a circular cross-section and covered with an insulating film; a covering member adapted to cover an upper portion of the base member, the covering member having a lower surface with a projection corresponding to and fittable into the coil housing portion of the base member; and a sealing material for firmly fixing the coil between the base member and the covering member to form a watertight seal.

The coil formed by winding the litz wire along the coil housing portion is pressed by the projection of the covering member, and is firmly fixed and sealed between the base member and the covering member using the sealing material. Thus, since the coil is protected with the sealing material, it is possible to secure electrical reliability and also improve the waterproof property, vibration resistance, insulating property, and thermal conductivity of the coil unit. Further, since the litz wire is used, the contactless charging coil unit has a low cost and high production efficiency, and thus is suitable for mass production.

The coil housing portion preferably includes a groove formed in a spiral shape in the upper surface of the base member in the direction from the central portion toward the outer periphery side.

The litz wire is preferably flattened such that a cross-section of the litz wire is made rectangular by being pressed by the projection. This can increase the space factor of the coil.

The projection of the covering member is preferably provided with a plurality of through-holes penetrating up to an upper surface of the covering member. Accordingly, it is possible to expel air within the groove-like coil housing portion to the outside during sealing, and confirm if the sealing material has been sufficiently applied during pressurization.

The coil housing portion is preferably formed of a plurality of guide pins arranged in an upright position on the upper surface of the base member. Accordingly, it is possible to allow the litz wire to be sufficiently surrounded with a larger amount of the sealing material, and thus improve the impact resistance, thermal conductivity, and waterproof property.

Each of the base member and the covering member is preferably formed in a predetermined bent shape using a soft, flexible resin. Accordingly, the base member and the covering member can be applied to an in-vehicle contactless charging coil unit with various shapes and for various uses, such as a bent and soft contactless charging coil unit.

The sealing material preferably contains a silicone resin.

According to the present invention, a manufacturing method of a contactless charging coil unit includes a sealing material applying step of applying a predetermined amount of a sealing material to at least a coil housing portion of a base member, the coil housing portion being formed in an upper surface of the base member in a spiral shape in a direction from a central portion toward an outer periphery side; a coil shaping step of shaping a coil by winding a litz wire along the coil housing portion, the litz wire having been obtained by twisting together a plurality of round wires each having a circular cross-section and covered with an insulating film; a sealing step of placing a base member with a lower surface having a projection corresponding to and fittable into the coil housing portion of the base member from above to allow the projection to fit into the coil housing portion and allow an excess portion of the sealing material to be pushed to an outside, and also allow the coil to be sealed in the coil housing portion in a watertight manner; and a curing step of curing the sealing material so as to allow the coil to be firmly fixed between the base member and the covering member.

The coil housing portion preferably includes a groove formed in a spiral shape in the upper surface of the base member in the direction from the central portion toward the outer periphery side, and the method preferably further includes a flattening step of flattening the litz wire to make a cross-section of the litz wire rectangular by pressing the litz wire with a predetermined pressure when placing the covering member from above to allow the projection to fit into the coil housing portion in the sealing step.

The coil housing portion is preferably formed of a plurality of guide pins arranged in an upright position on the upper surface of the base member, the sealing material applying step preferably includes applying the sealing material to gaps between the plurality of guide pins, and the coil shaping step preferably includes shaping the coil by winding the litz wire along the coil housing portion formed of the plurality of guide pins.

### ADVANTAGES OF THE INVENTION

According to the contactless charging coil unit of the present invention, the coil formed by winding the litz wire along the coil housing portion is pressed by the projection of the covering member, and is firmly fixed and sealed between the base member and the covering member using the sealing material. Thus, since the coil is protected with the sealing material, it is possible to secure electrical reliability and also improve the waterproof property, vibration resistance, insulating property, and thermal conductivity of the coil unit. Further, since the litz wire is used, the contactless charging coil unit has a low cost and high production efficiency, and thus is suitable for mass production.

According to the manufacturing method of the contactless charging coil unit of the present invention, a predetermined amount of the sealing material is applied to at least the coil housing portion of the base member, and the coil is shaped by winding the litz wire along the coil housing portion, and then, the base member is placed from above to allow its projection to fit into the coil housing portion and allow an excess portion of the sealing material to be pushed to the outside, and also allow the coil to be sealed in the coil housing portion in a watertight manner, and further, the sealing material is cured. Thus, it is possible to effectively fill a gap between the base member and the covering member with the sealing material, and secure the electrical reliability of the coil, and also obtain a coil unit that is excellent in the waterproof property, vibration resistance, insulating property, and thermal conductivity. Further, it is also possible to provide a contactless charging coil unit that has a low cost and high production efficiency, and thus is suitable for mass production.

### BREIF DESCRPTION OF THE DRAWINGS

Fig. 1 shows an exploded perspective view schematically illustrating the configuration of a contactless charging coil unit according to a first embodiment of the present invention;
Fig. 2 shows a local cross-sectional view schematically illustrating the configuration of the contactless charging coil unit illustrated in Fig. 1;
Fig. 3 shows a flowchart illustrating production steps of a manufacturing method of the contactless charging coil unit according to the present invention;
Fig. 4 sows local cross-sectional views illustrating states in the production steps of the manufacturing method of the contactless charging coil unit according to the present invention;
Fig. 5 shows a local cross-sectional view illustrating another example of a state in which a sealing material is applied in a sealing material applying step of the manufacturing method of the contactless charging coil unit according to the present invention;
Fig. 6 shows local cross-sectional views each schematically illustrating the configuration of a contactless charging coil unit according to a second embodiment of the present invention, and a manufacturing method thereof;
Fig. 7 shows local cross-sectional views each schematically illustrating the configuration of a contactless charging coil unit according to a third embodiment of the present invention;
Fig. 8 shows a local exploded perspective view and a local cross-sectional view each schematically illustrating the configuration of a contactless charging coil unit according to a fourth embodiment of the present invention; and
Fig. 9 shows an external perspective view and a local cross-sectional view each schematically illustrating the configuration of a contactless charging coil unit according to a fifth embodiment of the present invention.

### DESCRIPTION OF THE PREFERRED EMBDIMENTS

Hereinafter, embodiments of a contactless charging coil unit according to the present invention and a manufacturing method of the contactless charging coil unit will be described with reference to the drawings.

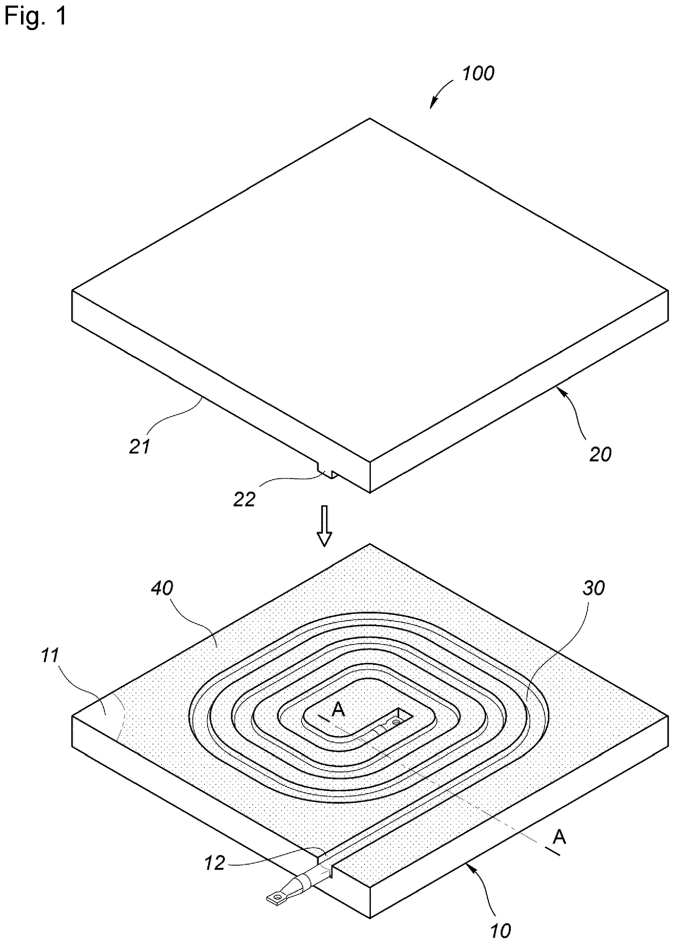

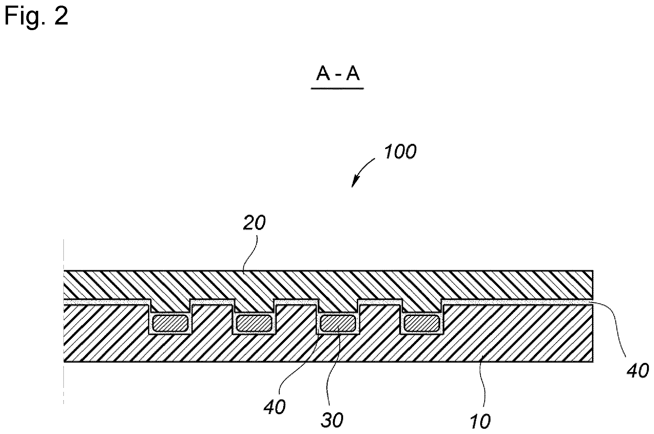

Fig. 1 schematically illustrates the configuration of a contactless charging coil unit 100 according to a first embodiment of the present invention. Fig. 1 illustrates a state in which a covering member 20 of the contactless charging coil unit 100 is removed. Fig. 2 is a local cross-sectional view (along line A-A) schematically illustrating the configuration of the contactless charging coil unit 100 illustrated in Fig. 1.

As illustrated in Fig. 1 and Fig. 2, the contactless charging coil unit 100 includes a base member 10, the covering member 20 covering the upper portion of the base member 10, a coil 30, and a sealing material 40.

The base member 10 is molded using a thermoplastic resin material or a thermosetting resin material, for example, and has an upper surface 11 having a coil housing portion 12 formed therein in a spiral shape in a direction from the central portion toward the outer periphery side. The coil housing portion 12 includes a quadrangular groove with a quadrangular cross-section formed in a spiral shape in the upper surface 11 of the base member 10 in a direction from the central portion toward the outer periphery side. A sidewall of the groove serves as a guide in winding a litz wire to form the coil 30. Note that the thickness of the base member 10 may be appropriately designed as needed.

The covering member 20 is molded using a thermoplastic resin material or a thermosetting resin material, for example, and has a lower surface 21 provided with a projection 22 corresponding to and fittable into the coil housing portion 12 of the base member 10, and thus is adapted to cover the upper portion of the base member 10. The projection 22 has a predetermined height, and is adapted to press and hold the coil 30 within the coil housing portion 12. Note that the thickness of the covering member 20 may be appropriately designed as needed.

The coil 30 is formed by winding a litz wire obtained by twisting together a plurality of round wires, each of which has a circular cross-section and is covered with an insulating film, along the coil housing portion 12. In the present embodiment, the litz wire is flattened with its cross-section made rectangular by being pressed by the projection 22 as illustrated in Fig. 2.

The sealing material 40 is adapted to firmly fix the coil 30 between the base member 10 and the covering member 20 to form a watertight seal. For example, gel-like silicone is preferably used and applied as the sealing material 40. As illustrated in Fig. 2, the sealing material 40 fills the coil housing portion 12 so as to surround the surface of the litz wire, and also fills a gap between the upper surface 11 of the base member 10 and the lower surface 21 of the covering member 20. As the sealing material 40 is cured, the coil 30 can be firmly fixed between the base member 10 and the covering member 20, and thus, a watertight seal can be formed. Note that a silicone sheet, or other resins or adhesives may also be used. It is desirable to use a material with a waterproof property, vibration resistance, insulating property, and thermal conductivity as the sealing material 40.

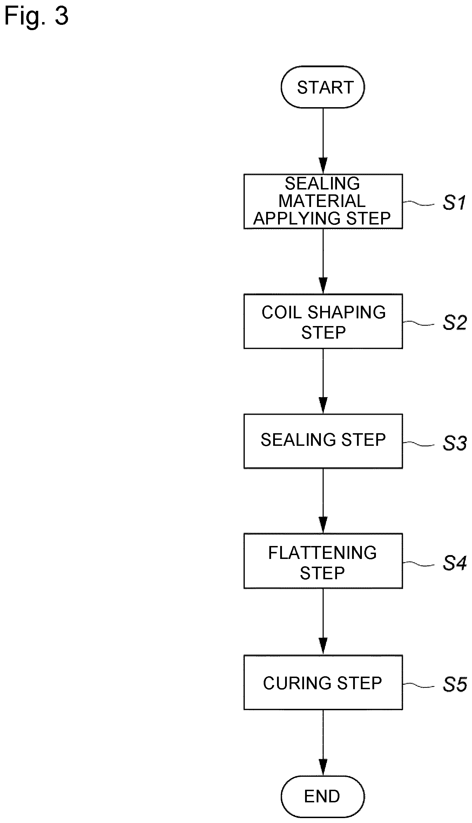

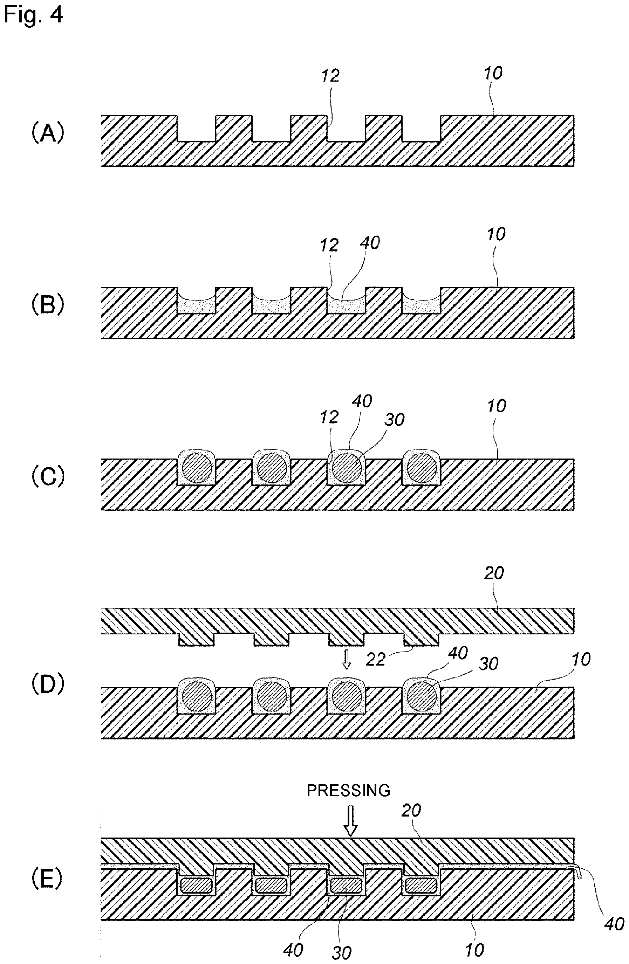

Fig. 3 shows production steps of a manufacturing method of the contactless charging coil unit. Fig. 4 shows local cross-sectional views corresponding to line A-A of the contactless charging coil unit 100 illustrated in Fig. 1.

In the present embodiment, the following are prepared: the base member 10 with the upper surface 11 that has the coil housing portion 12 formed therein in advance in a spiral shape in a direction from the central portion to the outer periphery side, and the covering member 20 with the lower surface 21 having the projection 22 corresponding to and fittable into the coil housing portion 12 of the base member 10.

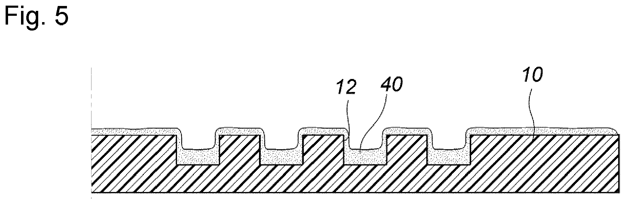

In the manufacturing method of the contactless charging coil unit 100, as illustrated in Fig. 3 and Fig. 4, a predetermine amount of the sealing material 40 is first applied to the coil housing portion 12 of the base member 10 using an injector, for example, in a sealing material applying step (step S1) (see Fig. 4(A) and Fig. 4(B)). Note that the present invention is not limited thereto. The sealing material 40 may be applied to the coil housing portion 12 and the upper surface 11 of the base member 10 as illustrated in Fig. 5. Next, in a coil shaping step (step S2), the coil 30 is formed by winding a litz wire obtained by twisting together a plurality of round wires, each of which has a circular cross-section and is covered with an insulating film, along the coil housing portion 12. When the coil 30 is arranged in the coil housing portion 12, the sealing material 40 is pushed up by the litz wire so that the litz wire is surrounded by the sealing material 40 (see Fig. 4(C)). Next, in a sealing step (step S3), the covering member 20 is placed above the base member 10 to allow the projection 22 to be fitted into the coil housing portion 12 and allow an excess portion of the sealing material 40 to be pushed to the outside, and also allow the coil 30 to be sealed in the coil housing portion 12 in a watertight manner (see Fig. 4(D)). Herein, the base member 10 and the covering member 20 are fastened together so that a gap between the base member 10 and the covering member 20 can be effectively filled with the sealing material 40. Next, in a flattening step (step S4), the covering member 20 is pressurized from above so that the litz wire is flattened with its cross-section made rectangular (see Fig. 4(E)). Then, in a curing step (step S5), the sealing material 40 is cured (i.e., solidified). Accordingly, the coil 30 is firmly fixed and sealed between the base member 10 and the covering member 20. Finally, the excess portion of the sealing material 40, which has been pushed to the outside, is removed so that the contactless charging coil unit 100 illustrated in Fig. 1 and Fig. 2 is obtained.

As described above, the contactless charging coil unit 100 of the present embodiment includes the base member 10 with the upper surface having the groove-like coil housing portion 12 formed therein in a spiral shape in a direction from the central portion to the outer periphery side, the covering member 20 with the lower surface 21 having the projection 22 corresponding to and fittable into the coil housing portion 12 of the base member 10, the coil 30 formed by winding a litz wire along the coil housing portion 12, and the sealing material 40 made of gel-like silicone. In such a case, silicone pools are formed in the four corners of the quadrangular groove of the coil housing portion 12 so that the litz wire can be protected more effectively.

In the manufacturing method of the contactless charging coil unit 100, a predetermined amount of the sealing material 40 is applied to the coil housing portion 12 of the base member 10, and the coil 30 is formed by winding a litz wire along the coil housing portion 12, and then, the covering member 20 is placed above the base member 10 to allow the projection 22 to fit into the coil housing portion 12 and allow an excess portion of the sealing material 40 to be pushed to the outside, and also allow the coil 30 to be sealed in the coil housing portion 12 in a watertight manner. Further, the covering member 20 is pressurized so that the litz wire is flattened with its cross-section made rectangular. Then, the sealing material 40 is cured in the curing step.

Accordingly, the gap between the base member 10 and the covering member 20 can be effectively filled with the sealing material 40, and thus, the coil 30 is in a molded state and is protected with the sealing material 40, which in turn can secure electrical reliability and also improve the waterproof property, vibration resistance, insulating property, and thermal conductivity of the contactless charging coil unit 100. In addition, since the litz wire is used, the contactless charging coil unit has a low cost and high production efficiency, and thus is suitable for mass production. Further, since the litz wire is flattened with its cross-section made rectangular, the space factor of the coil 30 can be increased.

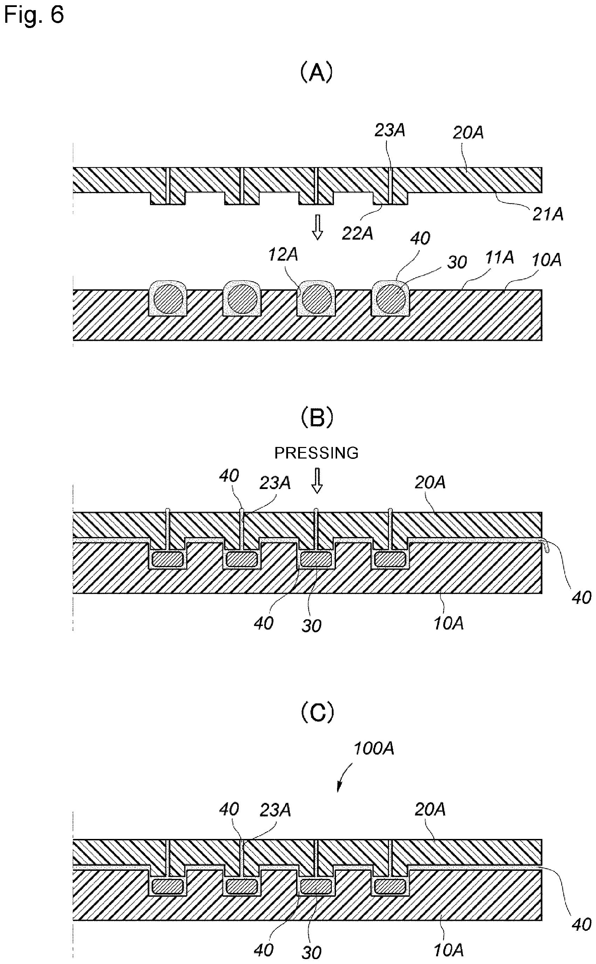

Next, a contactless charging coil unit according to a second embodiment of the present invention, and an embodiment of a manufacturing method thereof will be described. Fig. 6 shows local cross-sectional views each schematically illustrating the configuration of a contactless charging coil unit 100A according to the second embodiment, and a production method thereof. Specifically, Fig. 6(A) illustrates a state in which the sealing material 40 is applied to a coil housing portion 12A of a base member 10A in a sealing material applying step, and the coil 30 is formed by being wound along the coil housing portion 12A in a coil shaping step, Fig. 6(B) illustrates a step in which an excess portion of the sealing material 40 is pushed to the outside and the litz wire is flattened with its cross-section made rectangular in a sealing step and a flattening step, and Fig. 6(C) illustrates a state in which following a curing step, the excess portion of the sealing material 40, which has been pushed to the outside, is removed.

As illustrated in Fig. 6, the contactless charging coil unit 100A includes the base member 10A, a covering member 20A covering the upper portion of the base member 10A, the coil 30, and the sealing material 40. The contactless charging coil unit 100A has a configuration similar to that of the contactless charging coil unit 100 of the foregoing first embodiment except in the covering member 20A. In addition, the manufacturing method of the contactless charging coil unit 100A is also similar to that for the contactless charging coil unit 100 of the foregoing first embodiment.

The covering member 20A is molded using a thermoplastic resin material or a thermosetting resin material as illustrated in Fig. 6(A), and has a lower surface 21A with a projection 22A corresponding to and fittable into the coil housing portion 12A of the base member 10A. The projection 22A has a predetermined height, and is adapted to press and hold the coil 30 within the coil housing portion 12A. The projection 22A is provided with a plurality of through-holes 23A penetrating up to the upper surface. Providing such through-holes 23A can expel air within the groove-like coil housing portion 12A to the outside during sealing, and can confirm if the sealing material 40 has been sufficiently applied during pressurization.

As described above, the contactless charging coil unit 100A of the present embodiment includes the base member 10A, the covering member 20A, the coil 30, and the sealing material 40, and the covering member 20A is provided with the plurality of through-holes 23A. Thus, it is possible to obtain effects similar to those of the contactless charging coil unit 100 of the foregoing first embodiment. In addition, providing the plurality of through-holes 23A can expel air within the groove-like coil housing portion 12A to the outside during sealing, and can confirm if the sealing material 40 has been sufficiently applied during pressurization.

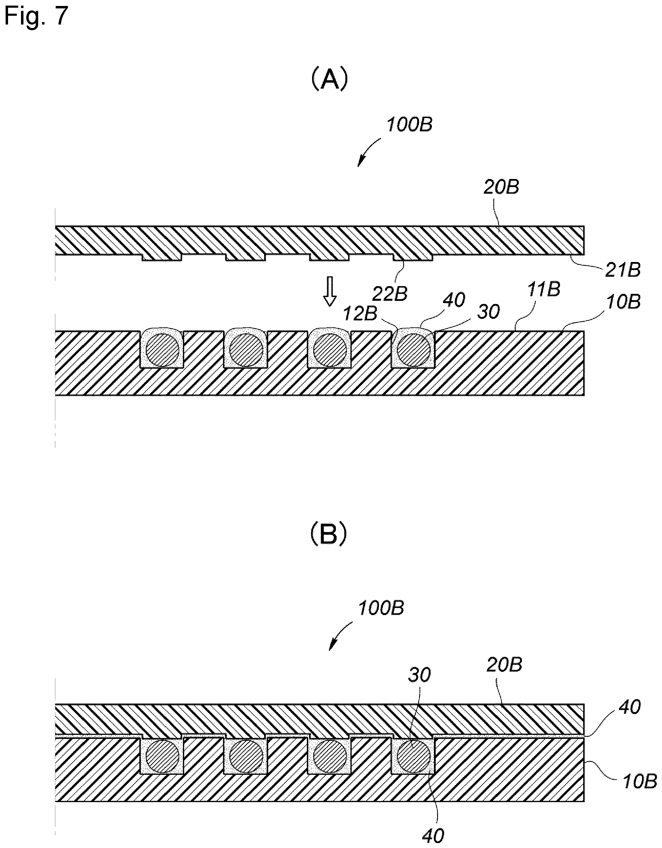

Next, a contactless charging coil unit according to a third embodiment of the present invention, and an embodiment of a manufacturing method thereof will be described. Fig. 7 shows local cross-sectional views each schematically illustrating the configuration of a contactless charging coil unit 100B according to the third embodiment, and a manufacturing method thereof. Specifically, Fig. 7(A) illustrates a state in which the sealing material 40 is applied to a coil housing portion 12B of a base member 10B in a sealing material applying step, and the coil 30 is formed by being wound along the coil housing portion 12B in a coil shaping step, and Fig. 7(B) illustrates a state in which following a sealing step and a curing step, an excess portion of the sealing material 40, which has been pushed to the outside, is removed.

As illustrated in Fig. 7, the contactless charging coil unit 100B includes the base member 10B, a covering member 20B covering the upper portion of the base member 10B, the coil 30, and the sealing material 40. The contactless charging coil unit 100B has a configuration similar to that of the contactless charging coil unit 100 of the foregoing first embodiment except that a projection 22B of the covering member 20B is formed short. In addition, the manufacturing method of the contactless charging coil unit 100B of the present embodiment is also similar to the manufacturing method of the contactless charging coil unit 100 of the foregoing first embodiment except that a flattening step of flattening a litz wire by making its cross-section rectangular is omitted.

That is, first, a predetermined amount of the sealing material 40 is applied to the coil housing portion 12B of the base member 10B in a sealing material applying step (step S1). Next, in a coil shaping step (step S2), the coil 30 is formed by winding a litz wire obtained by twisting together a plurality of round wires, each of which has a circular cross-section and is covered with an insulating film, along the coil housing portion 12B. When the coil 30 is arranged in the coil housing portion 12B, the litz wire is surrounded by the sealing material 40 (see Fig. 7(A)). Next, in a sealing step (step S3), the covering member 20B is placed above the base member 10B to allow the projection 22B to fit into the coil housing portion 12 and allow an excess portion of the sealing material 40 to be pushed to the outside, and also allow the coil 30 to be sealed in the coil housing portion 12B in a watertight manner. Then, in a curing step (step S5), the sealing material 40 is cured. Accordingly, the coil 30 is firmly fixed and sealed between the base member 10B and the covering member 20B. Finally, an excess portion of the sealing material 40, which has been pushed to the outside, is removed so that the contactless charging coil unit 100B illustrated in Fig. 7(B) is obtained. In the contactless charging coil unit 100B, the coil 30 is firmly fixed between the base member 10B and the covering member 20B and a watertight seal is thus formed with the cross-section of the litz wire remaining circular. In such a case, silicone pools are formed in the four corners of the quadrangular groove of the coil housing portion 12B so that the litz wire can be protected more effectively.

As described above, the contactless charging coil unit 100B of the present embodiment includes the base member 10B, the covering member 20B, the coil 30, and the sealing material 40. In such a case, it is possible to obtain effects similar to those of the contactless charging coil unit 100 of the foregoing first embodiment except that the space factor of the coil is lower than when the litz wire is flattened with its cross-section made rectangular.

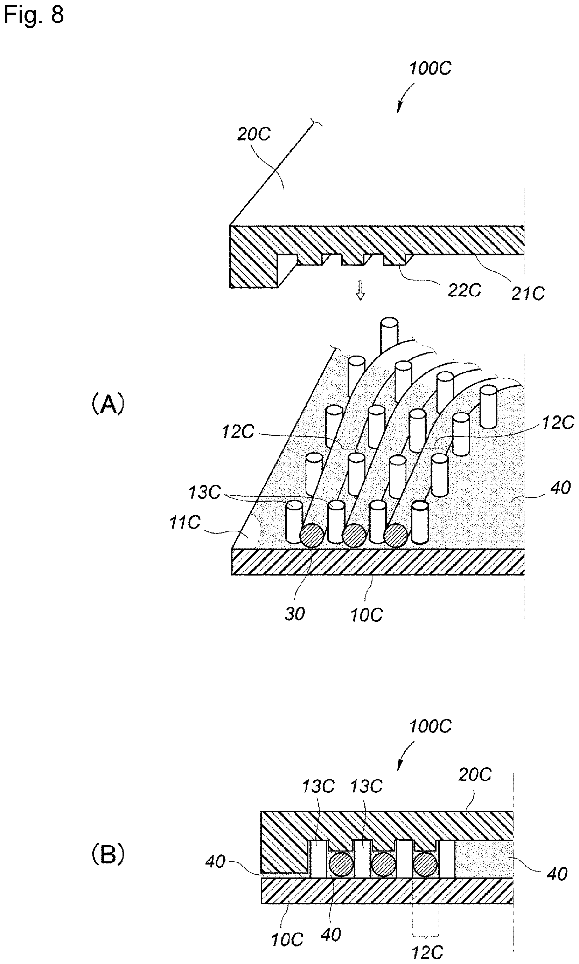

Next, a contactless charging coil unit according to a fourth embodiment of the present invention, and an embodiment of a manufacturing method thereof will be described. Fig. 8 schematically shows the configuration of a contactless charging coil unit 100C according to the fourth embodiment, and a manufacturing method thereof. Specifically, Fig. 8(A) is a local exploded cross-sectional view of the contactless charging coil unit 100C, and illustrates a state in which the sealing material 40 is applied to a coil housing portion 12C of a base member 10C in a sealing material applying step, and the coil 30 is formed by being wound along the coil housing portion 12C in a coil shaping step, and Fig. 8(B) is a local cross-sectional view of the contactless charging coil unit 100C, and illustrates a state in which following a sealing step and a curing step, an excess portion of the sealing material 40, which has been pushed to the outside, is removed.

As illustrated in Fig. 8, the contactless charging coil unit 100C includes the base member 10C, a covering member 20C covering the upper portion of the base member 10C, the coil 30, and the sealing material 40. In the present embodiment, the coil 30 and the sealing material 40 have configurations similar to those of the contactless charging coil unit 100 of the foregoing first embodiment.

The base member 10C is molded using a thermoplastic resin material or a thermosetting resin material, for example, and has an upper surface 11C having the coil housing portion 12C formed therein in a spiral shape in a direction from the central portion toward the outer periphery side. The coil housing portion 12C is formed of a plurality of guide pins 13C arranged in an upright position on the upper surface 11C of the base member 10C. That is, the plurality of guide pins 13C serve as guiding sidewalls in winding a litz wire. The plurality of guide pins 13C are molded using a resin material, for example.

The covering member 20C is molded using a thermoplastic resin material or a thermosetting resin material, for example, and has a lower surface 21C with a projection 22C corresponding to and fittable into the coil housing portion 12C of the base member 10C, and thus is adapted to cover the upper portion of the base member 10C. The projection 22C has a predetermined height, and is adapted to press and hold the coil 30 within the coil housing portion 12C.

In the manufacturing method of the contactless charging coil unit 100C of the present embodiment, first, a predetermined amount of the sealing material 40 is applied to the coil housing portion 12C of the base member 10C in a sealing material applying step. Next, in a coil shaping step (step S2), the coil 30 is formed by winding a litz wire obtained by twisting together a plurality of round wires, each of which has a circular cross-section and is covered with an insulating film, along the coil housing portion 12C. When the coil 30 is arranged in the coil housing portion 12C, the litz wire is surrounded by the sealing material 40 (see Fig. 8(A)). Next, in a sealing step, the covering member 20C is placed above the base member 10C to allow the projection 22C to fit into the coil housing portion 12C and allow an excess portion of the sealing material 40 to be pushed to the outside, and also allow the coil 30 to be sealed in the coil housing portion 12C in a watertight manner. Then, in a curing step, the sealing material 40 is cured. Accordingly, the coil 30 is firmly fixed and sealed between the base member 10C and the covering member 20C. Finally, the excess portion of the sealing material 40, which has been pushed to the outside, is removed so that the contactless charging coil unit 100C illustrated in Fig. 8(B) is obtained.

As described above, the contactless charging coil unit 100C of the present embodiment includes the base member 10C, the covering member 20C, the coil 30, and the sealing material 40. Since the coil housing portion 12C of the base member 10C is formed of the plurality of guide pins 13C, the groove-like coil housing portion 12C can be formed more easily. In addition, since the litz wire can be sufficiently surrounded with a larger amount of the sealing material 40, it is possible to improve the impact resistance, thermal conductivity, and waterproof property. Note that since the litz wire is not flattened in such a case, it is possible to obtain effects similar to those of the contactless charging coil unit 100 of the foregoing first embodiment except that the space factor of the coil 30 is lower than when the litz wire is flatted with its cross-section made rectangular.

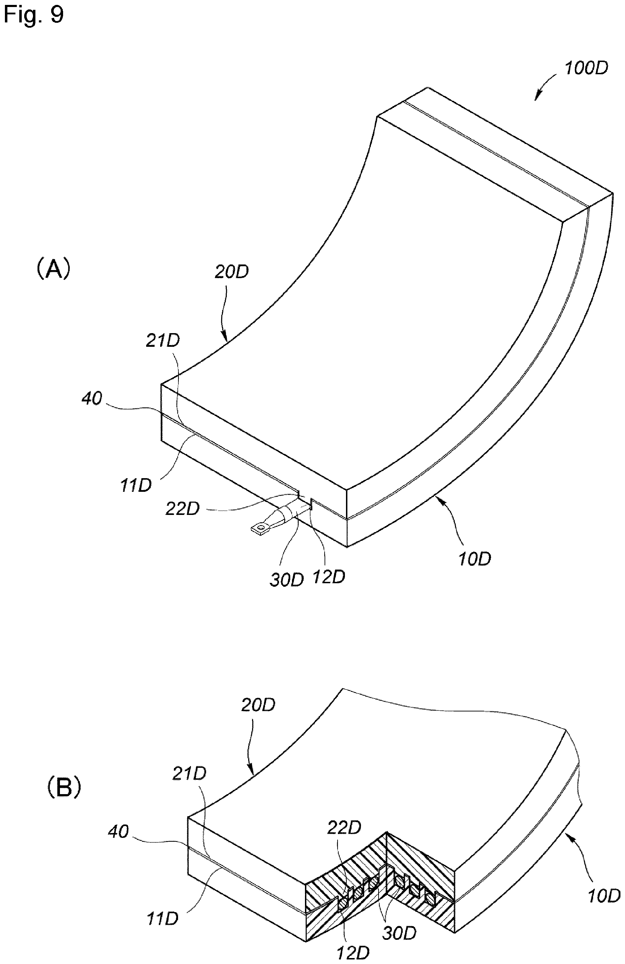

Next, a contactless charging coil unit according to a fifth embodiment of the present invention and an embodiment of a manufacturing method thereof will be described. Fig. 9 schematically shows the configuration of a contactless charging coil unit 100D according to the fifth embodiment. Specifically, Fig. 9(A) illustrates the appearance of the contactless charging coil unit 100D, and Fig. 9(B) illustrates a local cross-section of the contactless charging coil unit 100D.

As illustrated in Fig. 9, the contactless charging coil unit 100D includes a base member 10D, a covering member 20D covering the upper portion of the base member 10D, a coil 30D, and the sealing material 40. In the present embodiment, the sealing material 40 has a configuration similar to that of the contactless charging coil unit 100 of the foregoing first embodiment.

The base member 10D is molded in a bent shape using a soft, flexible material, such as silicone, for example, and has an upper surface 11D having a coil housing portion 12D formed therein in a spiral shape in a direction from the central portion toward the outer periphery side. The coil housing portion 12D includes a groove with a quadrangular cross-section formed in a spiral shape in the upper surface of the base member 10D in a direction from the central portion toward the outer periphery side. The thickness of the base member 10D may be appropriately designed as needed.

The covering member 20D is molded in a bent shape using a soft, flexible material, such as silicone, for example, and has a lower surface 21D with a projection 22D corresponding to and fittable into the coil housing portion 12D of the base member 10D, and thus is adapted to cover the upper portion of the base member 10D. The projection 22D has a predetermined height, and is adapted to press and hold the coil 30D within the coil housing portion 12D. The thickness of the covering member 20D may be appropriately designed as needed.

The coil 30D is formed by winding a litz wire obtained by twisting together a plurality of round wires, each of which has a circular cross-section and is covered with an insulating film, along the coil housing portion 12D. In such a case, the coil 30D is formed in a bent shape as with the base member 10D.

The manufacturing method of the contactless charging coil unit 100D is similar to that for the contactless charging coil unit 100B according to the foregoing third embodiment. The detailed description thereof is omitted herein.

As described above, the contactless charging coil unit 100D of the present embodiment includes the base member 10D, the covering member 20D, the coil 30D, and the sealing material 40. Since the base member 10D and the covering member 20D are each molded in a bent shape using a soft, flexible material, such as silicone, they can be applied to an in-vehicle contactless charging coil unit with various shapes and for various uses. In addition, impact resistance can be improved more.

Although the foregoing embodiments have described examples in which the coils 30 and 30D have an approximately angular annular shape, the present invention is not limited thereto. For example, the coils 30 and 30D may have a shape, such as an annular or elongated annular shape.

In addition, although the foregoing embodiments have described examples in which litz wires are used for the coils 30 and 30D, the present invention is not limited thereto. For example, round wires or rectangular wires may be used.

The present invention is not limited to the foregoing embodiments, and includes in its technical scope various configurations obtained through design change made within the scope of the claimed invention.

### INDUSTRIAL APPLICABILITY

The present invention is applicable to contactless charging systems for electric vehicles.

## Claims

1. A contactless charging coil unit comprising:
a base member with an upper surface having a coil housing portion formed therein in a spiral shape in a direction from a central portion toward an outer periphery side;
a coil formed by winding a litz wire along the coil housing portion, the litz wire having been obtained by twisting together a plurality of round wires each having a circular cross-section and covered with an insulating film;
a covering member adapted to cover an upper portion of the base member, the covering member having a lower surface with a projection corresponding to and fittable into the coil housing portion of the base member; and
a sealing material for firmly fixing the coil between the base member and the covering member to form a watertight seal.

2. The contactless charging coil unit as claimed in claim 1, wherein the coil housing portion includes a groove formed in a spiral shape in the upper surface of the base member in the direction from the central portion toward the outer periphery side.

3. The contactless charging coil unit as claimed in claim 2, wherein the litz wire is flattened such that a cross-section of the litz wire is made rectangular by being pressed by the projection.

4. The contactless charging coil unit as claimed in claim 2 or 3, wherein the projection of the covering member is provided with a plurality of through-holes penetrating up to an upper surface of the covering member.

5. The contactless charging coil unit as claimed in claim 1, wherein the coil housing portion is formed of a plurality of guide pins arranged in an upright position on the upper surface of the base member.

6. The contactless charging coil unit as claimed in claim 1 or 2, wherein each of the base member and the covering member is formed in a predetermined bent shape using a soft, flexible resin.

7. The contactless charging coil unit as claimed in any one of claims 1 to 6, wherein the sealing material contains a silicone resin.

8. A manufacturing method of a contactless charging coil unit, comprising:
a sealing material applying step of applying a predetermined amount of a sealing material to at least a coil housing portion of a base member, the coil housing portion being formed in an upper surface of the base member in a spiral shape in a direction from a central portion toward an outer periphery side;
a coil shaping step of shaping a coil by winding a litz wire along the coil housing portion, the litz wire having been obtained by twisting together a plurality of round wires each having a circular cross-section and covered with an insulating film;
a sealing step of placing a base member with a lower surface having a projection corresponding to and fittable into the coil housing portion of the base member from above to allow the projection to fit into the coil housing portion and allow an excess portion of the sealing material to be pushed to an outside, and also allow the coil to be sealed in the coil housing portion in a watertight manner; and
a curing step of curing the sealing material so as to allow the coil to be firmly fixed between the base member and the covering member.

9. The manufacturing method of the contactless charging coil unit as claimed in claim 8, wherein the coil housing portion includes a groove formed in a spiral shape in the upper surface of the base member in the direction from the central portion toward the outer periphery side, and wherein the method further comprises a flattening step of flattening the litz wire to make a cross-section of the litz wire rectangular by pressing the litz wire with a predetermined pressure when placing the covering member from above to allow the projection to fit into the coil housing portion in the sealing step.

10. The manufacturing method of the contactless charging coil unit as claimed in claim 8, wherein the coil housing portion is formed of a plurality of guide pins arranged in an upright position on the upper surface of the base member, wherin the sealing material applying step includes applying the sealing material to gaps between the plurality of guide pins, and wherein the coil shaping step includes shaping the coil by winding the litz wire along the coil housing portion formed of the plurality of guide pins.
